# EUROPEAN PATENT APPLICATION

(11) **EP 4 579 806 A1**
(43) Date of publication of application: **02.07.2025**
(21) Application number: 24744095.1
(22) Date of filing: 04.01.2024
(51) Int. Cl.: H01M 4/48, H01M 4/38, H01M 4/134, H01M 4/583, H01M 4/62, H01M 10/0525, H01G 11/26, H01G 11/30

(54) **NEGATIVE ELECTRODE MATERIAL, NEGATIVE ELECTRODE PLATE, ELECTRODE ASSEMBLY, BATTERY, AND ELECTRIC DEVICE**

(30) Priority: 17.01.2023 CN 202310072552
(71) Applicant: Contemporary Amperex Technology (Hong Kong) Limited, Hong Kong (HK)
(72) Inventor: YUN, Liang, Ningde, Fujian 352100 (CN); SUN, Xin, Ningde, Fujian 352100 (CN); DONG, Miaomiao, Ningde, Fujian 352100 (CN); LI, Xuan, Ningde, Fujian 352100 (CN); WU, Lili, Ningde, Fujian 352100 (CN); CHEN, Xingbu, Ningde, Fujian 352100 (CN); SONG, Peidong, Ningde, Fujian 352100 (CN); LIU, Rundie, Ningde, Fujian 352100 (CN)
(74) Representative: Ziebig Hengelhaupt Intellectual Property Attorneys Patentanwaltskanzlei PartGmbB
(86) International application number: PCT/CN2024/070685
(87) International publication number: WO 2024/152919

(57) **Abstract**

A negative electrode material, a negative electrode plate (101), an electrode assembly (20), a battery (40), and an electrical device (50) are disclosed. The negative electrode material includes a silicon-based material. The silicon-based material includes a porous silicon-based material and a micropowder silicon-based material configured to fill voids between particles of the porous silicon-based material. A volume median diameter of the porous silicon-based material is greater than a volume median diameter of the micropowder silicon-based material. The small-grained micropowder silicon-based material fills the voids between particles of the large-grained porous silicon-based material. The stress generated by the two types of silicon-based materials during intercalation and deintercalation of lithium is relieved by a pore channel structure in the porous silicon-based material and by an interstice between the porous silicon-based material and the micropowder silicon-based material, thereby limiting the expansion of the two types of silicon-based materials to the interior of the two types of silicon-based materials, and reducing the expansion rate of the negative electrode material.

## Description

This application claims priority to Chinese Patent Application No. 202310072552.2, filed with China National Intellectual Property Administration on January 17, 2023 and entitled "negative electrode material, negative electrode plate, electrode assembly, battery, and electrical device", which is incorporated herein by reference in its entirety.

### TECHNICAL FIELD

This application relates to the field of battery technology, and in particular, to a negative electrode material, a negative electrode plate, an electrode assembly, a battery, and an electrical device.

### BACKGROUND

Lithium-ion batteries are widely used by virtue of a high energy density, a long cycle life, and other merits. With the development of new energy vehicles and other fields, graphite conventionally used as a negative electrode material of a lithium-ion battery is difficult to meet the requirement for a higher energy density batteries. Silicon-based materials, including but not limited to, silicon, silicon oxide, and the like, have attracted attention by virtue of advantages such as a relatively high theoretical specific capacity and abundant reserves. However, a silicon-based material is prone to large volume expansion and shrinkage during charging and discharging, thereby causing separation and shedding of a negative electrode material layer from a current collector, and resulting in rapid capacity fading.

### SUMMARY

An objective of embodiments of this application is to provide a negative electrode material, a negative electrode plate, an electrode assembly, a battery, and an electrical device to alleviate the problem of expansion of a silicon-based negative electrode material.

The following describes technical solutions disclosed in some embodiments of this application.

According to a first aspect, an embodiment of this application provides a negative electrode material. The negative electrode material includes a silicon-based material. The silicon-based material includes a porous silicon-based material and a micropowder silicon-based material configured to fill voids between particles of the porous silicon-based material. A volume median diameter of the porous silicon-based material is greater than a volume median diameter of the micropowder silicon-based material.

In some embodiments, a chemical formula of the silicon-based material is SiOₓ, where 0 ≤ x < 2.

In some embodiments, 0.9 ≤ x ≤ 1.1.

In some embodiments, an internal pore diameter of the porous silicon-based material is 1 nm to 100 nm.

In some embodiments, the volume median diameter of the micropowder silicon-based material is 0.1 µm to 0.8 µm.

In some embodiments, the volume median diameter of the porous silicon-based material is 3 µm to 9 µm.

In some embodiments, based on a total mass of the negative electrode material, a mass percent of the micropowder silicon-based material is 5 wt% to 15 wt%.

In some embodiments, the negative electrode material further includes a carbon material.

In some embodiments, the carbon material includes graphite.

In some embodiments, a volume median diameter of the graphite is 12 µm to 20 µm.

In some embodiments, a gravimetric specific capacity of the negative electrode material is 750 mAh/g to 1700 mAh/g.

In some embodiments, a specific surface area of the negative electrode material is 5 m²/g to 10 m²/g.

In some embodiments, the porous silicon-based material assumes a core-shell structure. A core structure of the core-shell structure is a porous silicon particle, and a shell structure of the core-shell structure is a carbon coating.

According to a second aspect, an embodiment of this application provides a negative electrode plate. The negative electrode plate includes a negative current collector and a negative electrode material layer disposed on at least one side of the negative current collector. The negative electrode material layer includes the negative electrode material disclosed in the first aspect of embodiments of this application.

In some embodiments, a porosity of the negative electrode material layer is 10% to 25%.

According to a third aspect, an embodiment of this application provides an electrode assembly. The electrode assembly includes: the negative electrode plate disclosed in the second aspect of embodiments of this application; and a separator, where the separator overlays at least one side of the negative electrode plate.

According to a fourth aspect, an embodiment of this application provides a battery. The battery includes the electrode assembly disclosed in the third aspect.

According to a fifth aspect, an embodiment of this application provides an electrical device. The electrical device includes the battery disclosed in the fourth aspect of embodiments of this application.

### BRIEF DESCRIPTION OF DRAWINGS

To describe the technical solutions in some embodiments of this application more clearly, the following outlines the drawings to be used in the description of some exemplary embodiments of this application. Evidently, the drawings outlined below are merely some embodiments of this application. A person of ordinary skill in the art may derive other drawings from such drawings without making any creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of a battery cell according to some embodiments of this application;
FIG. 4 is a schematic structural diagram of an electrode assembly according to some embodiments of this application; and
FIG. 5 is a schematic cross-sectional view of an electrode plate according to some embodiments of this application.

List of reference numerals:
10-electrode plate; 1-current collector; 2-active material layer;
20-electrode assembly; 101-negative electrode plate; 102-positive electrode plate; 201-negative tab; 202-positive tab; 203-separator;
30-battery cell; 301-housing; 302-end cap; 303-negative electrode adapter strip; 304-positive electrode adapter strip; 305-insulation piece;
40-battery; 401-box; 4011-box body; 4012-box cover;
50-electrical device; 501-controller; 502-motor.

### DETAILED DESCRIPTION OF EMBODIMENTS

To make the objectives, technical solutions, and advantages of this application clearer, the following describes this application in further detail with reference to drawings and embodiments. Understandably, the specific embodiments described herein are merely intended to explain this application, but not to limit this application.

It is hereby noted that a component referred to as being "fixed to" or "disposed on" another component may be directly positioned onto the other component or may be positioned onto the other component indirectly through an intermediate component. A component referred to as "connected to" another component may be directly or indirectly connected to the other component. A direction or a positional relationship indicated by the terms such as "up", "down", "left", and "right" is a direction or positional relationship based on the illustration in the drawings, and is merely intended for ease of description but without indicating or implying that the indicated apparatus or component is necessarily located in the specified direction or constructed or operated in the specified direction. Therefore, such terms do not constitute any limitation on this application. A person of ordinary skill in the art may understand the specific meanings of such terms depending on specific situations. The terms "first" and "second" are used merely for ease of description, but without indicating or implying relative importance or implicitly specifying the number of technical features. Unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Lithium-ion batteries are widely used by virtue of a high energy density, a long cycle life, and other merits. With the development of new energy vehicles and other fields, graphite conventionally used as a negative electrode material of a lithium-ion battery is difficult to meet the requirement for a higher energy density batteries. Silicon-based materials, including but not limited to, silicon, silicon suboxide, and the like, have attracted attention by virtue of advantages such as a relatively high theoretical specific capacity and abundant reserves. However, the silicon-based materials are prone to large volume expansion and shrinkage during charging and discharging, thereby crumbling and pulverizing an active material, causing separation and shedding of the active material from a current collector, and resulting in rapid capacity fading. In addition, the large volume expansion also makes the electrode unable to generate a stable solid electrolyte interface (SEI) film, thereby irreversibly consuming lithium ions, and resulting in a decline in the charging and discharging efficiency of the electrode.

In view of this, the inventor hereof discloses a negative electrode plate. The negative electrode plate includes at least two types of silicon-based materials: a large-grained porous silicon-based material and a small-grained micropowder silicon-based material. The small-grained micropowder silicon-based material fills the voids between particles of the large-grained porous silicon-based material. The stress generated by the two types of silicon-based materials during intercalation and deintercalation of lithium is relieved by a pore channel structure in the porous silicon-based material and by an interstice between the porous silicon-based material and the micropowder silicon-based material, thereby limiting the expansion of the two types of silicon-based materials to the interior of the two types of silicon-based materials, and reducing the expansion rate of the negative electrode material. When the negative electrode material is applied to a negative electrode material layer, this technical solution can prevent the negative electrode material layer from expanding outward. At the same time, the added micropowder silicon-based material can also increase the theoretical gravimetric capacity of the negative electrode material, thereby increasing the energy density of the battery containing the negative electrode material. In addition, the small-grained micropowder silicon-based material possesses a larger specific surface area and more reactive sites, thereby ensuring rapid lithium-ion diffusion and charge exchange, and improving the kinetic performance of the battery containing the negative electrode material.

The battery disclosed in some embodiments of this application is applicable to, but not limited to, electrical devices such as a vehicle, watercraft, or aircraft. A power supply system of the electrical devices may be formed of the battery and the like disclosed herein.

Some embodiments of this application provide an electrical device that use a battery as a power supply. The electrical device may be, but is not limited to, a vehicle, a mobile phone, a portable device, a laptop computer, a ship, a spacecraft, an electric toy, an electric tool, or the like. The vehicle may be, but is not limited to, an oil-fueled vehicle, a natural gas vehicle, or a new energy vehicle. The new energy vehicle may be, but is not limited to, a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like.

For ease of description in the following embodiments, a vehicle 50 is used as an example of the electrical device according to an embodiment of this application.

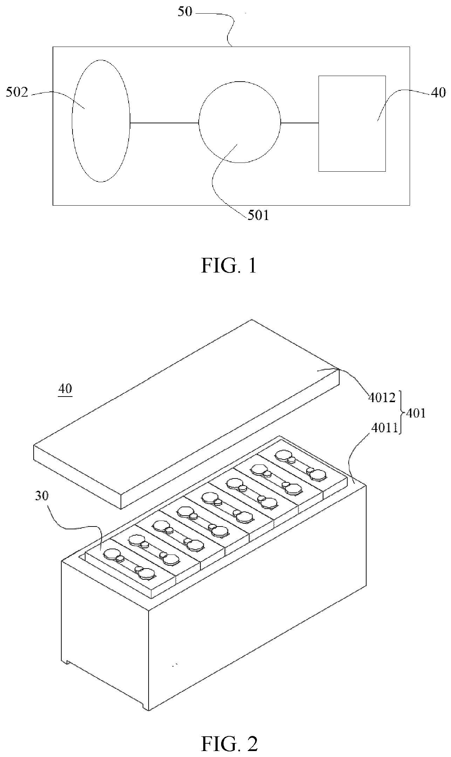

Referring to FIG. 1, FIG. 1 is a schematic structural diagram of a vehicle 50 according to some embodiments of this application. A battery 40 is disposed inside the vehicle 50. The battery 40 may be disposed at the bottom, front, or rear of the vehicle 50. The battery 40 may be configured to supply power to the vehicle 50. For example, the battery 40 may serve as an operating power supply of the vehicle 50. The vehicle 50 may further include a controller 501 and a motor 502. The controller 501 is configured to control the battery 40 to supply power to the motor 502, for example, to meet electrical energy requirements in starting, navigating, or running the vehicle 50.

In some embodiments of this application, the battery 40 serves not only as an operating power supply of the vehicle 50, but may also serve as a driving power supply of the vehicle 50 to provide driving power for the vehicle 50 in place of or partly in place of fuel oil or natural gas.

In some embodiments of this application, the battery 40 is a secondary battery. The secondary battery takes on many different forms, including but not limited to, a battery cell, a battery module, a battery pack, or the like. The secondary battery here means a battery that is reusable through activation of an active material in the battery by charging the battery that has been discharged.

Referring to FIG. 2, FIG. 2 is an exploded view of a battery 40 according to some embodiments of this application. The battery 40 includes a box 401 and a battery cell 30. The battery cell 30 is accommodated in the box 401. The box 401 is a component configured to provide an accommodation space for the battery cell 30. The box 401 may take on various structures.

In some embodiments, the box 401 may include a box body 4011 and a box cover 4012. The box body 4011 and the box cover 4012 fit and cover each other and jointly define an accommodation space configured to accommodate the battery cell 30. Optionally, the box body 4011 may be a hollow structure with one end open. The box cover 4012 may be a plate-like structure. The box cover 4012 fits and covers the open side of the box body 4011.

The battery 40 may include a plurality of battery cells 30. The plurality of battery cells 30 may be connected in series, parallel, or series-and-parallel pattern. The series-and-parallel pattern means a combination of series connection and parallel connection of the plurality of battery cells 30. The plurality of battery cells 30 may be directly connected in series, parallel, or series-and-parallel pattern, and then the whole of the plurality of battery cells 30 may be accommodated in the box 401. Alternatively, to make up a battery 40, the plurality of battery cells 30 may be connected in series, parallel, or series-and-parallel pattern to form a battery module first, and then a plurality of battery modules are connected in series, parallel, or series-and-parallel pattern to form a whole and accommodated in the box 401. The battery 40 may further include other structures. For example, the battery may include a busbar component (not shown in the drawing). The busbar component is configured to implement electrical connection between a plurality of battery cells 30.

Each battery cell 30 may be, but is not limited to, a secondary battery or primary battery, or, may be a lithium-sulfur battery, a sodium-ion battery, or a magnesium-ion battery. The battery cell 30 may be in a shape such as a cylinder, a flat body, a cuboid, or other shapes.

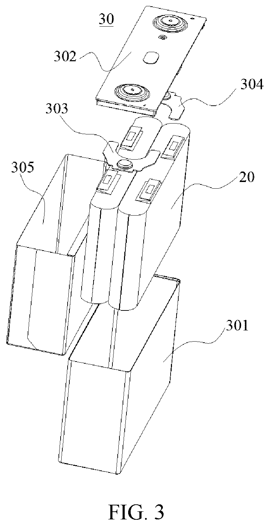

Referring to FIG. 3, FIG. 3 is an exploded view of a battery cell 30 according to some embodiments of this application. The battery cell 30 is a minimum unit of a battery. As shown in FIG. 3, the battery cell 30 includes a housing 301, an end cap 302, an electrode assembly 20, and other functional components.

The housing 301 is a hollow structure with one end open. The housing 301 is configured to fit the end cap 302 to form an internal environment for accommodating the electrode assembly 20, an electrolyte solution, and other functional components. The housing 301 may be in various shapes and sizes, such as a cuboid, cylinder, or hexagonal prism. Specifically, the shape of the housing 301 may depend on the specific shape and size of the electrode assembly 20. The housing 301 may be made of a variety of materials including but not limited to copper, iron, aluminum, stainless steel, aluminum alloy, plastic, and the like, without being limited herein.

The end cap 302 is a component that fits and covers the opening of the housing 301 to isolate the internal environment of the battery cell 30 from the external environment. Optionally, the shape of the end cap 302 may be adapted to the shape of the housing 301 to fit the housing 301. Optionally, the end cap 302 may be made of a material of appropriate hardness and strength (such as aluminum alloy), so that the end cap 302 is not prone to deform when squeezed or impacted. In this way, the battery cell 30 achieves higher structural strength and higher safety performance. The end cap 302 may be made of a variety of materials including but not limited to copper, iron, aluminum, stainless steel, aluminum alloy, plastic, and the like, without being limited herein.

The housing 301 may contain one or more electrode assemblies 20.

In some embodiments, the battery cell 30 further includes functional components such as a negative electrode adapter strip 303 and a positive electrode adapter strip 304. The negative electrode adapter strip 303 is configured to be electrically connected to a negative tab on the electrode assembly 20, and the positive electrode adapter strip 304 is configured to be electrically connected to a positive tab on the electrode assembly 20, so as to output or input electrical energy of the battery cell 30. Understandably, the negative electrode adapter strip 303 is made of a conductive material. The material of the negative electrode adapter strip 303 may be, but is not limited to, copper, iron, aluminum, or the like. The positive electrode adapter strip 304 is made of a conductive material. The material of the positive electrode adapter strip 304 may be, but is not limited to, copper, iron, aluminum, or the like.

In some embodiments, the battery cell 30 further includes an insulation piece 305. The insulation piece 305 is located inside the housing 301, and is configured to isolate the housing 301 from the electrode assembly 20 so as to reduce the risk of short-circuiting. For example, the insulator 305 may be plastic, rubber, or the like.

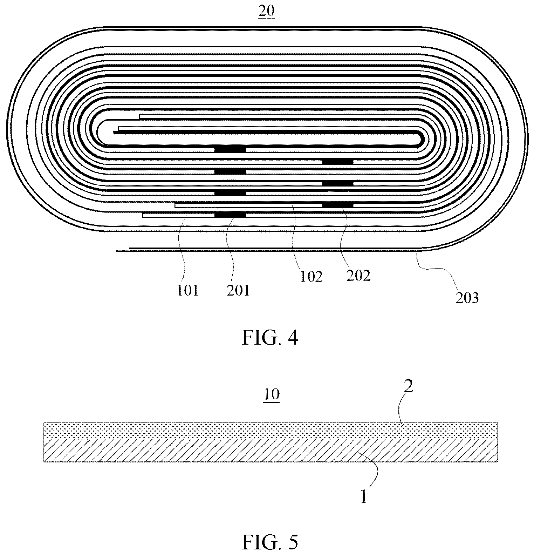

Referring to FIG. 4, FIG. 4 is a schematic structural diagram of an electrode assembly 20 according to some embodiments of this application. The electrode assembly 20 is a component in which electrochemical reactions occur in the battery cell 30. The electrode assembly 20 is mainly formed by winding or stacking an electrode plate structure that integrates a negative electrode plate 101 and a positive electrode plate 102, and a separator 203 is typically provided between a negative electrode plate 101 and a positive electrode plate 102 adjacent to each other.

The negative electrode plate 101 includes a negative current collector and a negative electrode material layer. The negative electrode material layer is applied onto a surface of the negative current collector. Using a lithium-ion battery as an example, the negative current collector may be made of copper. The negative electrode material layer includes a negative electrode material. The negative electrode material may be a silicon-based material or the like.

The positive electrode plate 102 includes a positive current collector and a positive electrode material layer. The positive electrode material layer is applied onto a surface of the positive current collector. Using a lithium-ion battery as an example, the positive current collector may be made of aluminum. The positive electrode material layer includes a positive electrode material. The positive electrode material may be lithium cobalt oxide, lithium iron phosphate, ternary lithium, lithium manganese oxide, or the like.

The separator 203 is a porous plastic film that allows lithium ions in the electrolyte solution to pass freely, but isolates the negative electrode plate 101 from the positive electrode plate 102 so that electrons inside the battery cannot pass freely. The separator 203 may be made of a material such as polypropylene (PP) or polyethylene (PE).

The negative current collector and the positive current collector each include a part that is not coated with the active material layer. The part uncoated with the active material layer is connected to a tab. Specifically, the negative current collector is connected to a negative tab 201, and the positive current collector is connected to a positive tab 202. During charge and discharge of the battery, the positive electrode material layer and the negative electrode material layer react with the electrolyte solution. The negative tab 201 is connected to the negative electrode adapter strip 303, and the positive tab 202 is connected to the positive electrode adapter strip 304 to form a current loop. Definitely, in some embodiments, the part, uncoated with the active material layer, of the negative current collector and the positive current collector separately constitutes a tab.

Referring to FIG. 5, FIG. 5 is a schematic structural diagram of an electrode plate 10 according to some embodiments of this application. The electrode plate 10 includes a current collector 1 and an active material layer 2. The active material layer 2 is disposed on at least one side of the current collector 1.

The current collector 1 means a component configured to collect current. Depending on functionality, the current collector 1 is classed into a negative current collector and a positive current collector. When the current collector 1 is a negative current collector, the active material layer 2 applied on the negative current collector is a negative electrode material layer, and the resultant electrode plate 10 is a negative electrode plate. When the current collector 1 is a positive current collector, the active material layer 2 applied on the positive current collector is a positive electrode material layer, and the resultant electrode plate 10 is a positive electrode plate. Using a lithium-ion battery as an example, optionally, the negative current collector is copper foil, and the positive current collector is aluminum foil. In addition, the current collector 1 may take on a variety of shapes, such as a strip shape or a square shape, without being limited herein.

The active material layer 2 includes an active material, a conductive agent, and a binder. The active material means a material that participates in an electrochemical oxidation/reduction reaction. Optionally, the active material is a powder. When the active material layer 2 is a negative electrode material layer, the active material is a negative electrode material. When the active material layer 2 is a positive electrode material layer, the active material is a positive electrode material. Using a lithium-ion battery as an example, the negative electrode material may be silicon and/or a silicon oxygen compound; and the positive electrode material may be, but is not limited to, lithium cobalt oxide, lithium manganese oxide, lithium iron phosphate, lithium iron manganese phosphate, lithium nickel cobalt oxide, lithium nickel manganese oxide, lithium nickel cobalt manganese oxide, a lithium-rich manganese-based material, or the like. The conductive agent means a material that collects microcurrents between active materials and between an active material and a current collector 1. The conductive agent may be, but is not limited to, conductive graphite, carbon nanotubes, acetylene black, or the like. The binder is a material that binds the active material to strengthen electronic contact between the active material and the conductive agent and between the active material and the current collector 1. The binder may be, but is not limited to, styrene-butadiene rubber (SBR), acrylonitrile, acrylate ester, polyvinylidene difluoride (PVDF), carboxymethyl cellulose (CMC), or the like.

The current collector 1 includes a first surface and a second surface that are opposite to each other along a thickness direction of the current collector 1. "At least one side of the current collector 1" means the first surface and/or the second surface of the current collector 1. Understandably, the active material layer 2 may be applied on the first surface or the second surface, or, the active material layer 2 is applied on both the first surface and the second surface.

Some embodiments of this application provide a negative electrode material. The negative electrode material includes a silicon-based material. The silicon-based material includes a porous silicon-based material and a micropowder silicon-based material configured to fill voids between particles of the porous silicon-based material. A volume median diameter of the porous silicon-based material is greater than a volume median diameter of the micropowder silicon-based material.

The silicon-based material here means a silicon-containing negative electrode material. Silicon-based materials include, but are not limited to, elemental silicon or silicon suboxide. A porous silicon-based material means a silicon-based material with a pore channel structure inside. The pore channel structure here may include at least one of micropores, mesopores, or macropores. The porous silicon-based material may be, but is not limited to, in the shape of sheets, spheres, and the like. The micropowder silicon-based material means a silicon-based material that assumes a micropowder structure, and specifically, is a silicon-based material with a volume median diameter D₅₀ less than 1 µm.

The porous silicon-based material and the micropowder silicon-based material herein mean two types of silicon-based materials of different morphologies. The porous silicon-based material assumes a porous structure, and the micropowder silicon-based material takes the form of micropowder particles, not necessarily indicating difference in composition between the two types of silicon-based materials. In some embodiments, the composition of the porous silicon-based material may be identical to the composition of the micropowder silicon-based material, for example, both are elemental silicon. In some other embodiments, the porous silicon-based material and the micropowder silicon-based material may be of different compositions. For example, the porous silicon-based material is elemental silicon, and the micropowder silicon-based material is silicon suboxide.

The micropowder silicon-based material being configured to fill the voids between particles of the porous silicon-based material means that the micropowder silicon-based material is located outside the porous silicon-based material rather than inside the pore channel structure of the porous silicon-based material. Specifically, the micropowder silicon-based material is configured to fill the voids between the particles of the porous silicon-based material.

The volume median diameter of the porous silicon-based material being greater than the volume median diameter of the micropowder silicon-based material may mean that the volume median diameter of the porous silicon-based material is 2, 4, 6, 8, or 10 times the volume median diameter of the micropowder silicon-based material. Understandably, the smaller the volume median diameter of the micropowder silicon-based material, the more competent the micropowder silicon-based material is to fill the voids between the particles of the porous silicon-based material, and the higher the content of the silicon-based material in the negative electrode material.

The negative electrode material is set to include a silicon-based material that possesses a relatively high theoretical specific capacity, and the silicon-based material includes a large-grained porous silicon-based material and a small-grained micropowder silicon-based material. The small-grained micropowder silicon-based material fills the voids between particles of the large-grained porous silicon-based material. The stress generated by the two types of silicon-based materials during intercalation and deintercalation of lithium is relieved by a pore channel structure in the porous silicon-based material and by an interstice between the porous silicon-based material and the micropowder silicon-based material, thereby limiting the expansion of the two types of silicon-based materials to the interior of the two types of silicon-based materials, and reducing the expansion rate of the negative electrode material. When the negative electrode material is applied to a negative electrode material layer, this technical solution can prevent the negative electrode material layer from expanding outward, thereby suppressing the negative electrode material layer from peeling off from the current collector. In addition, the small-grained micropowder silicon-based material possesses a larger specific surface area and more reactive sites, thereby ensuring rapid lithium ion diffusion and charge exchange, and improving the kinetic performance of the battery containing the negative electrode material.

According to some embodiments of this application, a chemical formula of the silicon-based material is SiOₓ, where 0 ≤ x < 2.

Understandably, the silicon-based material represented by the chemical formula SiOₓ (where 0 ≤ x < 2) is elemental silicon or silicon suboxide, that is, a suboxide of silicon. In this chemical formula, x represents the oxygen content in the silicon-based material, and x may be 0 or any value between 0 and 2, for example, 0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 1.99, or the like. When x = 0, the silicon-based material contains elemental silicon. When 0 < x < 2, the silicon-based material contains silicon suboxide. The silicon-based material includes a porous silicon-based material and a micropowder silicon-based material. Understandably, both the porous silicon-based material and the micropowder silicon-based material are silicon-based materials, and the silicon-based material may include at least one of elemental silicon or silicon oxide.

With the silicon-based material being elemental silicon and/or silicon suboxide of a relatively high theoretical specific capacity, the theoretical gravimetric capacity of the negative electrode material is increased, thereby increasing the energy density of the battery.

According to some embodiments of this application, 0.9 ≤ x ≤ 1.1.

A main reason for the large volume effect of the silicon-based material is that the silicon-based material forms LiₓSi during the lithiation. Generally, SiOₓ generates elemental silicon, lithium oxide, and lithium silicate (LiₓSiO_{y}) during initial lithiation, and the elemental silicon generated by the reaction actually serves the function of storing lithium. Therefore, the volume effect of SiOₓ is closely related to the oxygen content, that is, the value of x. When the value of x decreases, the content of elemental silicon increases, and the effective capacity increases, but the volume effect also increases, and the cycle stability of the negative electrode material declines. When the value of x increases, the content of the elemental silicon decreases, the effective capacity decreases, and the conductivity decreases, but the volume effect is alleviated, and the cycle stability of the negative electrode material is improved.

Optionally, x is 0.9, 0.95, 1.0, 1.05, or 1.1.

When x is set to a value of 0.9 to 1.1, the silicon-based material is silicon suboxide, and the oxygen content is close to the silicon content in silicon suboxide. The silicon suboxide with a stoichiometric ratio falling within the above range not only possesses a much higher specific capacity than graphite, but also prevents drastic volume expansion that occurs like elemental silicon during charging. In addition, such silicon suboxide can ensure that sufficient elemental silicon is generated during the lithiation to ensure sufficient conductivity and effective capacity.

According to some embodiments of this application, an internal pore diameter of the porous silicon-based material is 1 nm to 100 nm.

Optionally, the internal pore diameter of the porous silicon-based material is 1 nm, 5 nm, 10 nm, 20 nm, 30 nm, 40 nm, 50 nm, 60 nm, 70 nm, 80 nm, 90 nm, or 100 nm.

Generally, if the internal pore diameter of the porous silicon-based material is excessively large, capacity loss and polarization increase will be caused to the negative electrode material. However, if the pore diameter is excessively small, the expansion of the negative electrode material will increase. With the internal pore diameter of the porous silicon-based material falling within the range of 1 nm to 100 nm, the resultant negative electrode material is superior in capacity and expansion resistance.

According to some embodiments of this application, the volume median diameter of the micropowder silicon-based material is 0.1 µm to 0.8 µm.

Optionally, the volume median diameter of the micropowder silicon-based material is 0.1 µm, 0.2 µm, 0.3 µm, 0.4 µm, 0.5 µm, 0.6 µm, 0.7 µm, or 0.8 µm.

If the volume median diameter of the micropowder silicon-based material is excessively small, the interstice between the filling micropowder silicon-based material and the porous silicon-based material and the interstice between particles of the micropowder silicon-based material are small, and are unable to sufficiently release the internal stress generated during expansion of the micropowder silicon-based material. If the volume median diameter of the micropowder silicon-based material is excessively large, the amount of the micro-silicon powder material that can fill the interstices will be reduced. With the volume median diameter of the micropowder silicon-based material falling within the range of 0.1 µmto 0.8 µm, the resultant negative electrode material is superior in both expansion resistance and specific capacity.

According to some embodiments of this application, the volume median diameter of the porous silicon-based material is 3 µm to 9 µm.

Optionally, the volume median diameter of the porous silicon-based material is 3 µm, 3.5 µm, 4 µm, 4.5 µm, 5 µm, 5.5 µm, 6 µm, 6.5 µm, 7 µm, 7.5 µm, 8 µm, 8.5 µm, or 9 µm.

The volume median diameter of the porous silicon-based material, if excessively small or excessively large, will adversely affect formation of the pore channels on the porous silicon-based material, and make the porous silicon-based material unable to release the internal stress well sufficiently. With the volume median diameter of the porous silicon-based material falling within the range of 3 µm to 9 µm, the resultant negative electrode material is superior in expansion resistance. In addition, with the volume median diameter falling within this range, the diffusion path of lithium ions in the porous silicon-based material is shortened, and the C-rate performance of the negative electrode material is improved.

According to some embodiments of this application, based on a total mass of the negative electrode material, a mass percent of the micropowder silicon-based material is 5 wt% to 15 wt%.

Optionally, the mass percent of the micropowder silicon-based material is 5 wt%, 6 wt%, 7 wt%, 8 wt%, 9 wt%, 10 wt%, 11 wt%, 12 wt%, 13 wt%, 14 wt%, 15 wt%.

The specific capacity of the negative electrode material can be increased by letting the micropowder silicon-based material fill the voids between the particles of the porous silicon-based material. However, if the amount of the filling micropowder silicon-based material is excessively large, the mass percent of porous silicon-based material will be lower, thereby reducing the overall expansion resistance of the negative electrode material. In addition, considering that the micropowder silicon-based material fills the voids between the particles of the porous silicon-based material, because the micropowder silicon-based material also expands in volume during lithiation, the larger the amount of the micropowder silicon-based material added as fillers between the solid particles, the larger the expansion volume of the micropowder silicon-based material during lithiation. If the expansion volume of the micropowder silicon-based material goes beyond a limit value, the electrode may be caused to expand or even the negative electrode material may be caused to fall off. With the mass percent of the micropowder silicon-based material in the negative electrode material falling within the range of 5 wt% to 15 wt%, the expansion volume of the porous silicon-based material and the micropowder silicon-based material during lithiation is just as much as absorbable by the voids between the particles of the porous silicon-based material, thereby preventing the negative electrode material from excessively expanding outward.

According to some embodiments of this application, the negative electrode material further includes a carbon material.

The carbon material means a carbon-based material that can participate in the intercalation and deintercalation of lithium ions. Carbon materials include, but are not limited to, graphite, carbon nanotubes, graphene, and conductive carbon black.

Optionally, the volume median diameter of the carbon material is greater than the volume median diameter of the porous silicon-based material. Understandably, because the volume median diameter of the porous silicon-based material is greater than the volume median diameter of the micropowder silicon-based material, the volume median diameter of the micropowder silicon-based material is also smaller than the volume median diameter of the carbon material. With the micropowder silicon-based material added between the carbon material and the porous silicon-based material, because the expansion volume of the carbon material is relatively small, the carbon material can be used to buffer the expansion stress of the silicon-based material. When the negative electrode material forms a negative electrode material layer, the negative electrode material layer is prevented from being crumbled by excessive local stress. In addition, with the small-grained micropowder silicon-based material added in the large-grained carbon material and porous silicon-based material, the contact between a large particle and a small particle is increased, and the conductive effect is improved. Without the fillers, a large amount of conductive agent needs to be added to link the porous silicon-based material, and consequently, reduces the specific capacity of the negative electrode material.

Considering that the volume expansion of the carbon material itself during charge and discharge is relatively small, by adding the carbon material in the micropowder silicon-based material and the porous silicon-based material, the carbon material can buffer the expansion of the silicon-based material and reduce the expansion rate of the negative electrode material. At the same time, because the main constituents of the porous silicon-based material and the micropowder silicon-based material are elemental silicon and/or silicon oxide, the conductivity is low. With the carbon material added in the negative electrode material, a conductive network can be formed in the negative electrode material by using the high conductivity of the carbon material, thereby ensuring good contact between the silicon-based material and the current collector and between the particles of the silicon-based material.

According to some embodiments of this application, the carbon material includes graphite.

Graphite is a material resistant to high temperature and corrosion, and is of high electrical conductivity and thermal conductivity, and exhibits stable chemical properties. Graphite referred to herein may be, but is not limited to, natural graphite, artificial graphite, and composite graphite. Graphite may assume, but is not limited to, the shape of sheets, blocks, or the like.

With the graphite added in the micropowder silicon-based material and the porous silicon-based material, the expansion rate of the negative electrode material is reduced while the conductivity of the negative electrode material is improved at the same time.

According to some embodiments of this application, the volume median diameter of the graphite is 12 µm to 20 µm.

Optionally, the volume median diameter of the graphite is 12 µm, 13 µm, 14 µm, 15 µm, 16 µm, 17 µm, 18 µm, 19 µm, or 20 µm.

Generally, an excessively large volume median diameter of the graphite is unfavorable to dispersing the graphite evenly the in silicon-based material, and an excessively small volume median diameter of the graphite leads to inability to sufficiently buffer the expansion stress of the silicon-based material. With the volume median diameter of the graphite falling within the range of 12 µm to 20 µm, the resultant negative electrode material is superior in expansion resistance and conductivity.

According to some embodiments of this application, a theoretical gravimetric specific capacity of the negative electrode material is 750 mAh/g to 1700 mAh/g.

The theoretical gravimetric specific capacity of the negative electrode material is a weighted average of the theoretical gravimetric specific capacities of all constituents of the negative electrode material. Optionally, the negative electrode material includes a porous silicon-based material, a micropowder silicon-based material, and a carbon material. For example, the negative electrode material includes 0.4 gram of porous silicon-based material, 0.1 gram of micropowder silicon-based material, and 0.5 gram of carbon material. In such materials, the porous silicon-based material is silicon suboxide, the micropowder silicon-based material is elemental silicon, and the carbon material is graphite. The theoretical gravimetric specific capacity of the silicon suboxide is 2100 mAh/g, the theoretical gravimetric specific capacity of the elemental silicon is 4200 mAh/g, and the theoretical gravimetric specific capacity of the graphite is 372 mAh/g. Therefore, the theoretical gravimetric specific capacity of the negative electrode material is: (0.4 g × 2100 mAh/g + 0.1 g × 4200 mAh/g + 0.5 g × 372 mAh/g)/(0.4 g + 0.1 g + 0.5 g) =1446 mAh/g. For another example, the negative electrode material includes 0.6 gram of porous silicon-based material, 0.15 gram of micropowder silicon-based material, and 0.25 gram of carbon material. In such materials, the porous silicon-based material and the micropowder silicon-based material are silicon suboxide, and the carbon material is graphite. Therefore, the theoretical gravimetric specific capacity of the negative electrode material is: (0.6 g × 2100 mAh/g + 0.15 g × 2100 mAh/g + 0.25 g × 372 mAh/g)/(0.6 g + 0.15 g + 0.25 g) = 1668 mAh/g.

Generally, the theoretical gravimetric specific capacity of the negative electrode material can be changed by changing the constituents of the negative electrode material, and the theoretical gravimetric specific capacity of the negative electrode material can also be changed by changing the mixing ratio between the constituents of the negative electrode material. The theoretical gravimetric specific capacity of the negative electrode material is 750 mAh/g to 1700 mAh/g. As can be seen, the constituents of the negative electrode material are not entirely elemental silicon, because the theoretical gravimetric specific capacity of elemental silicon is much higher than 1700 mAh/g, and the volume expansion rate of elemental silicon during charge and discharge is higher. Therefore, the negative electrode material inevitably contains substances with a theoretical gravimetric specific capacity less than that of elemental silicon. Such substances include, but are not limited to, silicon suboxide, carbon material, or the like. The volume expansion rates of such substances during charge and discharge are typically lower than the volume expansion rate of elemental silicon.

Optionally, the theoretical gravimetric specific capacity of the negative electrode material is 750 mAh/g, 800 mAh/g, 900 mAh/g, 1000 mAh/g, 1100 mAh/g, 1200 mAh/g, 1300 mAh/g, 1400 mAh/g, 1500 mAh/g, 1600 mAh/g, or 1700 mAh/g.

With the theoretical gravimetric specific capacity of the negative electrode material falling within the range of 750 mAh/g to 1700 mAh/g, in contrast to the conventional graphitic negative electrode material, the theoretical gravimetric specific capacity of the negative electrode material is increased. In contrast to the pure-element negative electrode material, the volume expansion rate of the negative electrode material is well suppressed. On the one hand, the expansion rate of the material in use is lower than that of the elemental silicon. On the other hand, the small-grained micropowder silicon-based material fills the voids between the particles of the large-grained porous silicon-based material. The two factors combined together can limit the expansion of the two types of silicon-based materials to the interior of the two types of silicon-based materials. When the negative electrode material is formed into a negative electrode material layer, the negative electrode material layer can be suppressed from expanding outward.

According to some embodiments of this application, a specific surface area of the negative electrode material is 5 m²/g to 10 m²/g.

Optionally, the specific surface area of the negative electrode material is 5 m²/g, 5.5 m²/g, 6 m²/g, 6.5 m²/g, 7 m²/g, 7.5 m²/g, 8 m²/g, 8.5 m²/g, 9 m²/g, 9.5 m²/g, or 10 m²/g.

Due to the presence of pore channels in the porous silicon-based material and the relatively small volume median diameter of the micropowder silicon-based material, the specific surface area of the negative electrode material increases. Although the increase in the specific surface area of the negative electrode material improves the kinetic performance to some extent, the increase in the specific surface area increases the area of the SEI film accordingly, thereby increasing the consumption of lithium ions and reducing the charge-discharge efficiency of the negative electrode material. With the specific surface area of the negative electrode material falling within the range of 5 m²/g to 10 m²/g, the electrochemical performance of the negative electrode material is superior.

According to some embodiments of this application, the porous silicon-based material assumes a core-shell structure. A core structure of the core-shell structure is a porous silicon particle, and a shell structure of the core-shell structure is a carbon coating.

The core-shell structure is an ordered assembly structure formed by encapsulating one material with another material through chemical bonding or another interaction force. The core structure of the core-shell structure is porous silicon particles, where the porous silicon particles mean a granular silicon-based material with a pore channel structure inside. The shell structure being a carbon coating means that the carbon coating wraps around the outer surface of the core structure.

With the porous silicon-based material assuming a core-shell structure, on the one hand, the carbon coating wraps around the porous silicon particles with a pore channel structure inside, so that the micropowder silicon-based material is not prone to enter the pore channels to fill the pore channels, thereby effectively buffering the volume expansion effect of the silicon-based material. At the same time, the carbon coating can also effectively improve the electronic conductivity of the porous silicon-based material.

According to some embodiments of this application, this application further provides a negative electrode plate. The negative electrode plate includes a negative current collector and a negative electrode material layer disposed on at least one side of the negative current collector. The negative electrode material layer includes the negative electrode material disclosed above.

Optionally, the negative electrode material layer is disposed on one side of the negative current collector. Optionally, the negative electrode material layer is disposed on two opposite surfaces of the negative current collector along the thickness direction.

The small-grained micropowder silicon-based material fills the voids between particles of the large-grained porous silicon-based material in the negative electrode material layer. The stress generated by the two types of silicon-based materials during intercalation and deintercalation of lithium is relieved by a pore channel structure in the porous silicon-based material and by an interstice between the porous silicon-based material and the micropowder silicon-based material, thereby limiting the expansion of the two types of silicon-based materials to the interior of the two types of silicon-based materials, preventing the negative electrode material layer from expanding outward, and suppressing the negative electrode material layer from peeling off from the current collector.

According to some embodiments of this application, the porosity of the negative electrode material layer is 10% to 25%.

Optionally, the porosity of the negative electrode material layer is 10%, 15%, 20%, or 25%.

With some pores retained in the negative electrode material layer, the pores provide a buffer space for the expansion of the silicon-based material in the negative electrode material layer, thereby suppressing the negative electrode material layer from crumbling and pulverizing. However, an excessively high porosity of the negative electrode material layer reduces the specific capacity of the negative electrode material layer. Therefore, with the porosity of the negative electrode material layer falling within an appropriate range of 10% to 25%, the expansion resistance of the negative electrode material layer is optimized while ensuring superior electrochemical performance of the negative electrode material layer.

Some embodiments of this application further provide a method for preparing a porous silicon-based material. The preparation method uses a silicon-based material (SiOₓ, 0 ≤ x < 2) as a raw material, mixes the silicon-based material with an etching solution. The etching solution includes a fluorine source, a metal salt, and a weak acid. Subsequently, the mixture is stirred at a first temperature for a first duration.

Optionally, the fluorine source includes, but is not limited to, hydrofluoric acid and lithium fluoride.

Optionally, the metal salt includes, but is not limited to, at least one of lithium carbonate, lithium nitrate, zinc nitrate, magnesium nitrate, or magnesium silicate.

Optionally, the weak acid includes, but is not limited to, at least one of boric acid, oxalic acid, or carbonic acid.

Optionally, the etching solution further includes an organic compound. The organic compound includes an alcohol, such as glycerol. Optionally, the organic compound includes a phenolic compound, such as phenol.

Optionally, the etching solution further includes an oxidant. Optionally, the oxidant includes at least one of potassium permanganate, permanganic acid, or hydrogen peroxide.

Optionally, the first temperature is 50 °C to 80 °C. Optionally, the first temperature is 50 °C, 55 °C, 60 °C, 65 °C, 70 °C, 75 °C, or 80 °C.

Optionally, the first duration is 2 to 24 hours. Optionally, the first duration is 2 hours, 4 hours, 6 hours, 8 hours, 10 hours, 12 hours, 14 hours, 16 hours, 18 hours, 20 hours, 22 hours, or 24 hours.

Optionally, the stirring speed in the stirring process is 100 rdm/min to 500 rdm/min. Optionally, the stirring speed is 100 rdm/ min, 200 rdm/ min, 300 rdm/ min, 400 rdm/min, or 500 rdm/min.

Optionally, the preparation method further includes pulverizing and grading the product obtained by the stirring. The particle diameter of the porous silicon-based material finally prepared can be controlled by adjusting the degree of the pulverization.

Optionally, the preparation method further includes: performing a carbon coating process by a chemical vapor deposition (Chemical Vapor Deposition, CVD for short) method to obtain a composite material, in which the carbon source is at least one of methane, ethylene, or acetylene. The following gives a more detailed description with reference to specific embodiments.

### Embodiment 1

### S1: Preparing a porous silicon-based material

(1) Mixing a silicon-based material (specifically silicon suboxide) with a fluorine source LIF, metal salts lithium carbonate, lithium nitrate, and zinc nitrate, a weak acid oxalic acid, an oxidant potassium permanganate, and hydrogen peroxide, and stirring and corroding the mixture at 70 °C at a stirring speed of 300 rdm/min for 12 hours.
(2) Pulverizing and grading the product of the mixing and corrosion to obtain a porous silicon-based material.
(3) Coating the porous silicon-based material with carbon by a CVD method, in which the carbon sources is methane and acetylene.

S2: Preparing a negative electrode material: Mixing and blending the porous silicon-based material prepared in step S1 above, graphite, and micropowder silicon-based material (specifically elemental silicon) to obtain a negative electrode material. The particle size distribution curve of the negative electrode material exhibits three distinct peaks at 6 µm, 15 µm, and 0.2 µm respectively, with a D₅₀ value. The mass percent of the micropowder silicon-based material in the negative electrode material is 8 wt%, and the theoretical gravimetric capacity of the negative electrode material is 1250 mAh/g.

### S3: Preparing a battery

(1) Applying a positive electrode slurry onto 10 µm-thick aluminum foil, and pressing the slurry flat to obtain a positive electrode plate of 400 µm in thickness. The positive electrode slurry is a mixture of NCM98, SP, SWCNT, and PVDF mixed at a ratio of 96: 2: 0.6: 0.2: 1.2. The viscosity of the positive electrode slurry is 7500 mPa·s. The solid content of the slurry is 68 wt%. The NCM98 is a positive electrode material, the SP is conductive carbon black, the SWCNT is carbon nanotubes, and the PVDF is a binder.
(2) Applying a negative electrode slurry onto 4.5 µm-thick copper foil until the coating thickness reaches 125 µm, and pressing the slurry flat to obtain a negative electrode plate of 110 µm in thickness. The negative electrode slurry is a mixture of SiO, SP, SWCNT, and PAALi mixed at a ratio of 96.8: 1.04: 0.06: 2.1, where the SiO is the negative electrode material prepared in step S2 above, the SP is conductive carbon black, the SWCNT is carbon nanotubes, and the PAALi is a binder.
(3) Assembling a lithium foil-compounded negative electrode plate, a positive electrode plate, a separator, and an electrolyte solution to form a pouch cell, and leaving the pouch cell to stand at a 45 °C high temperature for 24 hours.
(4) After completion of the high-temperature standing, performing chemical formation and capacity grading, and recording the first-cycle Coulombic efficiency and the mid-point voltage. The specific steps of chemical formation and capacity grading include: Leaving the cell that has completed standing at high temperature to stand statically for 12 hours, and then charging the cell at a constant current of 0.02C until the voltage reaches 3.5 V, discharging the cell at a constant current of 0.1C until the voltage drops to 4.6 V, charging the cell at a constant voltage of 4.6 V until the current drops to 0.02C, leaving the cell to stand for 3 minutes, discharging the cell at a constant current of 0.1C until the voltage drops to 2.5 V, reducing pressure, evacuating air, and sealing the cell, thereby completing the chemical formation and capacity grading.
(5) Performing 0.5C cycling after the chemical formation and capacity grading.

### Embodiment 2

Different from Embodiment 1 in that the mass percent of the micropowder silicon-based material in the negative electrode material is 15 wt%, and the theoretical specific capacity of the negative electrode material is 1419 mAh/g.

### Embodiment 3

Different from Embodiment 1 in that the mass percent of the micropowder silicon-based material in the negative electrode material is 5 wt%, and the theoretical specific capacity of the negative electrode material is 1190 mAh/g.

### Embodiment 4

Different from Embodiment 1 in that the volume median diameter of the porous silicon-based material in the negative electrode material is 9 µm.

### Embodiment 5

Different from Embodiment 1 in that the volume median diameter of the porous silicon-based material in the negative electrode material is 3 µm.

### Embodiment 6

Different from Embodiment 1 in that the volume median diameter of the micropowder silicon-based material in the negative electrode material is 0.5 µm.

### Embodiment 7

Different from Embodiment 1 in that the volume median diameter of the micropowder silicon-based material in the negative electrode material is 0.8 µm.

### Comparative Embodiment 1

Different from Embodiment 1 in that no micropowder silicon is added and the theoretical specific capacity of the negative electrode material is 970 mAh/g.

### Comparative Embodiment 2

Different from Embodiment 1 in that no porous silicon-based material is added and the theoretical specific capacity of the negative electrode material is 3000 mAh/g.

To verify the advancement of the embodiments of this application, the specimens of the products prepared in the embodiments and comparative embodiments are tested, as described below:
1. The energy density of the batteries prepared in Embodiments 1 to 7 and Comparative Embodiments 1 to 2 is tested, and the test results are shown in Table 1. As can be seen from the results in Table 1, in Embodiments 1 to 3, with the increase of the mass percent of the micropowder silicon-based material in the negative electrode material, the theoretical gravimetric capacity of the negative electrode material also increases, thereby increasing the energy density of the resultant battery. In contrast to Comparative embodiment 1, the energy density of the battery is increased.
2. The expansion rate of the electrode plates prepared in Embodiments 1 to 7 and Comparative Embodiments 1 to 2 is tested. The initial thickness of a cold-pressed electrode plate is L₀, the initial full-charge thickness is L₁, and P₁= (L₁ - L₀)/L₀ × 100%. The full-charge thickness at the end point of storage is L₂, and P₂ = (L₂ - L₀)/L₀ × 100%. The test results are shown in Table 1. As can be seen from the results in Table 1, in Embodiments 1 to 3 and Comparative Embodiment 1, with the increase of the mass percent of the micropowder silicon-based material in the negative electrode material, the expansion rate of the electrode plate decreases first and then increases. That is because the micropowder silicon-based material and the porous silicon-based material expand in volume during lithiation. Because the micropowder silicon-based material is configured to fill the voids between the particles of the porous silicon-based material, the expanded micropowder silicon-based material and the expanded porous silicon-based material squeeze each other, thereby suppressing the negative electrode material layer on the electrode plate from expanding outward, and in turn, reducing the expansion rate of the electrode plate. However, with further increase of the mass percent of the micropowder silicon-based material, the voids between the particles of the porous silicon-based materials can hardly buffer the expansion effect of all the micropowder silicon-based material, thereby increasing the expansion rate of the electrode plate. In Embodiments 1, 4, and 5, with the increase of the volume median diameter of the porous silicon-based material, the expansion rate of the electrode plate decreases. That is because a larger volume median diameter of the porous silicon-based material leads to larger voids between the particles of the porous silicon-based material, and is more conducive to buffering the volume expansion of the micropowder silicon-based material, thereby reducing the expansion rate of the electrode plate. In Embodiments 1, 6, and 7, with the increase of the volume median diameter of the micropowder silicon-based material, the expansion rate of the electrode plate increases. That is because a smaller particle diameter of the micropowder silicon-based material makes it more convenient for the micropowder silicon-based material to fill the voids between the particles of the porous silicon-based material. The volume expansion of the micropowder silicon-based material is buffered by the voids, thereby reducing the expansion rate of the electrode plate.

As can be seen from Embodiments 1 to 7 versus Comparative Embodiment 1, in the negative electrode material, after the micropowder silicon-based material is added into the porous silicon-based material, not only the energy density of the battery is increased, but also the expansion of the electrode plate is alleviated.

In Embodiment 1 versus Embodiment 2, although the micropowder silicon-based material in use can increase the energy density of the battery, the expansion rate of the electrode plate is high. By combining the micropowder silicon-based material with the porous silicon-based material, the expansion of the electrode plate can be controlled effectively.

**Table 1**

| Group | Mass percent of micropowder silicon-based material | Theoretical gravimetric capacity | Volume median diameter of porous silicon-based material | Volume median diameter of micropowder silicon-based material | Energy density (Wh/kg) | P1 (%) | P2 (%) |
|---|---|---|---|---|---|---|---|
| Embodiment 1 | 8 wt% | 1250 mAh/g | 6 µm | 0.2µm | 450 | 40% | 45% |
| Embodiment 2 | 15 wt% | 1419mAh/g | 6 µm | 0.2µm | 500 | 70% | 75% |
| Embodiment 3 | 5 wt% | 1190mAh/g | 6 µm | 0.2µm | 420 | 90% | 96% |
| Embodiment 4 | 8 wt% | 1250 mAh/g | 9µm | 0.2µm | 465 | 30% | 35% |
| Embodiment 5 | 8 wt% | 1250 mAh/g | 3 µm | 0.2µm | 460 | 70% | 75% |
| Embodiment 6 | 8 wt% | 1250 mAh/g | 6 µm | 0.5 µm | 455 | 45% | 50% |
| Embodiment 7 | 8 wt% | 1250 mAh/g | 6 µm | 0.8µm | 452 | 52% | 56% |
| Comparative Embodiment 1 | / | 970mAh/g | 6 µm | / | 400 | 100% | 105% |
| Comparative Embodiment 2 | / | 3000mAh/g | / | 0.2 µm | 580 | 300% | 330% |

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A negative electrode material, **characterized in that** the negative electrode material comprises a silicon-based material, the silicon-based material comprises a porous silicon-based material and a micropowder silicon-based material configured to fill voids between particles of the porous silicon-based material, and a volume median diameter of the porous silicon-based material is greater than a volume median diameter of the micropowder silicon-based material.

2. The negative electrode material according to claim 1, **characterized in that** a chemical formula of the silicon-based material is SiOₓ, wherein 0 ≤ x < 2.

3. The negative electrode material according to claim 2, **characterized in that** 0.9 ≤ x ≤ 1.1.

4. The negative electrode material according to claim 1, **characterized in that** an internal pore diameter of the porous silicon-based material is 1 nm to 100 nm.

5. The negative electrode material according to any one of claims 1 to 4, **characterized in that** the volume median diameter of the micropowder silicon-based material is 0.1 µm to 0.8 µm.

6. The negative electrode material according to any one of claims 1 to 4, **characterized in that** the volume median diameter of the porous silicon-based material is 3 µm to 9 µm.

7. The negative electrode material according to any one of claims 1 to 4, **characterized in that**, based on a total mass of the negative electrode material, a mass percent of the micropowder silicon-based material is 5 wt% to 15 wt%.

8. The negative electrode material according to any one of claims 1 to 4, **characterized in that** the negative electrode material further comprises a carbon material.

9. The negative electrode material according to claim 8, **characterized in that** the carbon material comprises graphite.

10. The negative electrode material according to claim 9, **characterized in that** a volume median diameter of the graphite is 12 µmto 20 µm.

11. The negative electrode material according to any one of claims 1 to 4, **characterized in that** a gravimetric specific capacity of the negative electrode material is 750 mAh/g to 1700 mAh/g.

12. The negative electrode material according to any one of claims 1 to 4, **characterized in that** a specific surface area of the negative electrode material is 5 m²/g to 10 m²/g.

13. The negative electrode material according to any one of claims 1 to 4, **characterized in that** the porous silicon-based material assumes a core-shell structure, a core structure of the core-shell structure is a porous silicon particle, and a shell structure of the core-shell structure is a carbon coating.

14. A negative electrode plate, **characterized in that** the negative electrode plate comprises a negative current collector and a negative electrode material layer disposed on at least one side of the negative current collector, and the negative electrode material layer comprises the negative electrode material according to any one of claims 1 to 13.

15. The negative electrode plate according to claim 14, **characterized in that** a porosity of the negative electrode material layer is 10% to 25%.

16. An electrode assembly, **characterized in that** the electrode assembly comprises:
the negative electrode plate according to any one of claims 14 to 15; and
a separator, wherein the separator overlays at least one side of the negative electrode plate.

17. A battery, **characterized in that** the battery comprises the electrode assembly according to claim 16.

18. An electrical device, **characterized in that** the electrical device comprises the battery according to claim 17.
